# EUROPÄISCHE PATENTANMELDUNG

(11) **EP 1 170 226 A1**
(43) Veröffentlichungstag der Anmeldung: **09.01.2002**
(21) Anmeldenummer: 01115085.1
(22) Anmeldetag: 21.06.2001
(51) Int. Cl.: B65G 17/32, C03B 35/12, C03B 35/06

(54) **Verfahren und Transportsystem zum Befördern von Flaschen, insbesondere Glasflaschen**

(30) Priorität: 21.06.2000 DE 10029466
(71) Anmelder: Heinz-Glas GmbH, 96355 Tettau-Kleintettau (DE)
(72) Erfinder: Nebe, Ulrich, Dr., 76831 Billigheim (DE); Krischke, Alfred, 96355 Tettau-Kleintettau (DE)
(74) Vertreter: Zipse & Habersack

(57) **Zusammenfassung**

Verfahren und Transportsystem zum Befördern von Flaschen/Behältern und insbesondere Glasflaschen von einer Produktionsmaschine durch einen Kühlofen zu einer Verpackungsstation. Das Verfahren ist gekennzeichnet durch die folgenden Verfahrensschritte:
- Greifen der fertig geformten Flasche bzw. des Behälters (3) durch einen Greifer (8) mittels eines Werkstückträgers (1),
- Überführen des Werkstückträgers (1) mit einhängender Flasche (3) in ein Transportsystem (2) und Entkuppeln des Werkstückträgers (1) vom Greifer (8),
- Befördern des Werkstückträgers (1) mit einhängender Flasche (3) durch den Kühlofen zu Verpackungsstation,
- Lösen des Werkstückträgers (1) von der Flasche (3) und
- Zurückführen des Werkstückträgers (1) zum Greifer (8).

## Beschreibung

Die Erfindung betrifft ein Verfahren und ein Transportsystem zum Befördern von Flaschen und insbesondere Glasflaschen von der Produktionsmaschine durch den Kühlofen zur Verpackung.

Flaschen und Behälter, insbesondere für die Kosmetikindustrie, haben unterschiedlichste Größen und Formen. Soweit sie genügend Standfestigkeit besitzen, werden sie, von den Fertigungsstationen einer Produktionsmaschine kommend, unmittelbar auf dem Kettenband eines Transportsystems aufgestellt, das sie durch den Kühlofen zur Verpackung führt. Dabei kommt es nicht selten zum Umfallen und zu Bruch, so dass die sogenannte Ausbringung, d. h. das Verhältnis von Brutto-Produktion zum Nettoergebnis verbesserungsbedürftig ist.

Der Erfindung liegt die Aufgabe zugrunde, bei einem Verfahren und einem Transportsystem zum Befördern von Flaschen und insbesondere Glasflaschen von der Produktionsmaschine durch den Kühlofen zur Verpackung die Ausbringung zu erhöhen und das Handling zu erleichtern.

Diese Aufgabe wird mit einem Verfahren gemäß Patentanspruch 1 bzw. mit einem Transportsystem gemäß Patentanspruch 4 gelöst. Weiterbildungen der Erfindung sind in den Unteransprüchen beschrieben.

Der Erfindung liegt der Gedanke zugrunde, dass ein hängender Transport der aus der Produktionsmaschine kommenden und der Kühlung zugeführten Flaschen und Behälter Vorteile bringt, da
1. das Erstarren zuerst im Mündungsbereich abgeschlossen ist und
2. die Hälse bzw. Mündungen nur geringen Größenschwankungen unterworfen sind.

Ein weiterer Grundgedanke der Erfindung liegt darin, zum Überführen der Flaschen bzw. Behälter von der Produktionsmaschine zu einem Transportschienensystem diese unter Zwischenschaltung eines Werkstückträgers mit einem Greifeinsatz aus hochwärmebeständigem Material zu greifen und diesen Werkstückträger nach Einhängen in das Transportschienensystem vom Greifermechanismus zu entkoppeln. Die Flasche bzw. der Behälter wird also im Werkstückträger hängend durch den Kühlofen zur Verpackungsstation transportiert, dort geöffnet und zur Produktionsmaschine zurückgeführt. Unabhängig von der Flaschengröße und -form haben die Werkstückträger gleiche Außenabmessungen, passend zum verwendeten Transportschienensystem. Da die Mündungen von Flaschen und Behältern im wesentlichen normiert sind, bedarf es auch nur weniger unterschiedlicher Greifeinsätze aus hochwärmebeständigem Material für die Werkstückträger.

Zum beidseitigen Greifen der fertig geformten Flasche am Flaschenhals ist der Werkstückträger zweckmäßig zweigeteilt. Damit dieser zweigeteilte Werkstückträger beim nachfolgenden Transport zusammengehalten bleibt, wird der Werkstückträger beim Überführen von der Produktionsmaschine nach einem Drehen um 90° so in das Transportschienensystem eingesetzt, dass seitliche Längsführungen an den Transportschienen für den gewünschten Zusammenhalt sorgen. Alternativ aber baulich aufwendiger ist das Zusammenhalten der Werkstückträgerhälften mittels eines mechanischen oder magnetischen Verriegelungsmechanismusses.

Die Erfindung wird nachfolgend anhand beigefügten Zeichnungen näher erläutert. Es zeigen
Figur 1 schematisch in Draufsicht und im Schnitt das Überführen eines Werkstückträgers von den Fertigungsstationen einer Produktionsmaschine auf ein Transportschienensystem;
Figur 2 in Seitenansicht, teilweise geschnitten, einen Greifermechanismus mit Werkstückträger und Transportschiene; und
Figur 3 in Draufsicht, teilweise geschnitten, den Werkstückträger von Figur 2,
Figur 4 in Seitenansicht und in Draufsicht einen alternativen, selbstverriegelnden Werkstückträger.

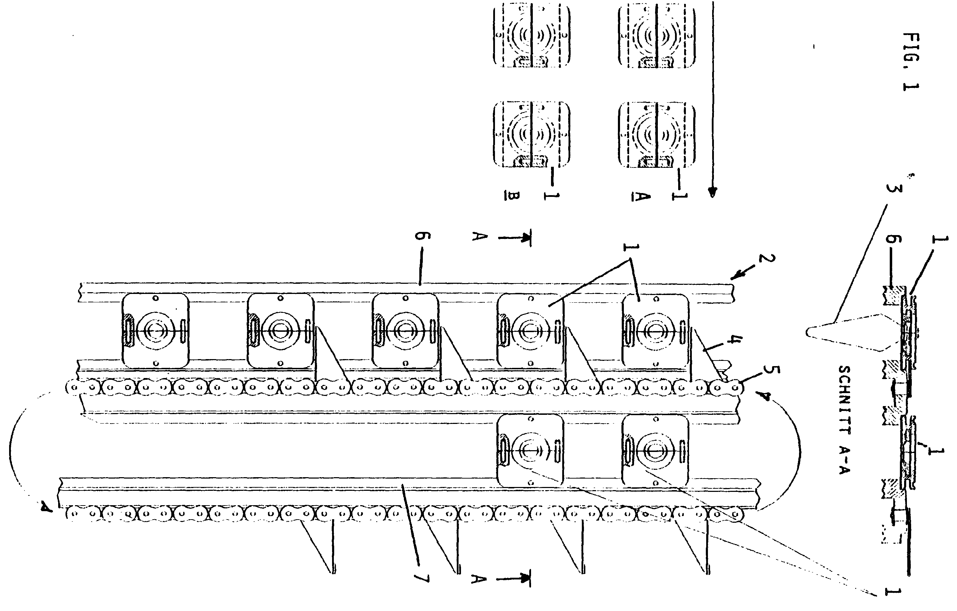

In Figur 1 sind links durch die Darstellung von je zwei Werkstückträgern 1 die zwei Fertigungsstationen A und B einer Produktionsmaschine für die Glasflaschenherstellung angedeutet. In jeder der Fertigungsstationen A und B werden gleichzeitig zwei Flaschen geformt, durch jeweils einen Greifermechanismus mittels der Werkzeugträger 1 ergriffen und unter Drehen um 90° in das Transportschienensystem 2 eingehängt. Schnitt A-A zeigt eine Flasche 3, wie sie von einem Werkzeugträger 1 am Hals gehalten in das Transportschienensystem 2 eingehängt ist. Beim Einhängen des Werkzeugträgers 1 mit Flasche 3 in das Transportschienensystem 2 wird der Werkzeugträger 1 vom Greifermechanismus entkuppelt, wonach der Werkzeugträger 1 mit Flasche 3 durch die Mitnehmer 4 einer Förderkette 5 auf der Transportschiene 6 zu einem Kühlofen befördert wird. Der Durchlauf durch den Kühlofen ist konventionell und deshalb nicht gesondert dargestellt. Nach dem Kühlofen werden die Werkzeugträger 1 mit Flasche 3 zu einer (ebenfalls nicht dargestellten) Verpackungsstation weiterbefördert, wo die Werkstückträger 1 über einen gesonderten Mechanismus geöffnet werden und die Flaschen 3 in die Verpakkung gleiten. Die leeren Werkstückträger 1 werden, wie in Figur 1 schematisch durch die Rückführschiene 7 gezeigt, einem (nicht dargestellten) Schachtspeicher von oben zugeführt. Im Schachtspeicher werden die Werkstückträger 1 gepuffert und am unteren Ende durch ein Schiebesystem in die Aufnahmeposition für einen Parallelgreifer gebracht, der die Werkstückträger greift und sie den einzelnen Fertigungsstationen A, B zuführt. Damit ist der Kreislauf geschlossen.

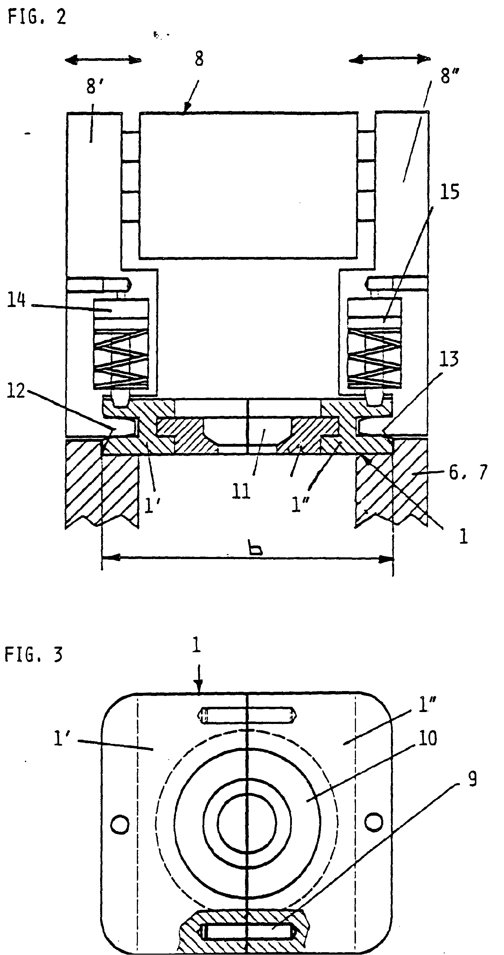

Figuren 2 und 3 zeigen einen Parallelgreifer 8 mit zwei Greiferbacken 8' und 8'', die z. B. pneumatisch zusammenfahrbar sind und dabei die zwei Hälften 1' und 1'' eines Werkstückträgers 1 zwischen sich einklemmen. Führungsstifte 9 führen die Werkstückträgerhälften beim Zusammen- und Auseinanderfahren. Zwischen sich nehmen die Werkstückträgerhälften 1' und 1'' einen ebenfalls zweigeteilten Greifeinsatz 10 aus einem hochwärmebeständigem Material auf. Die Innenöffnung 11 des Greifeinsatzes 10 bemißt sich nach den Hals- bzw. Mündungsabmessungen der zu transportierenden Flasche 3. Die Außenbreite b des Werkstückträgers 1 ist unabhängig von der Flaschengröße und -form und ist der Schienenbreite angepaßt. Die seitlichen Schienenränder 12, 13 geben Führung beim Transport der Werkzeugträger 1 und sorgen gleichzeitig für den Zusammenhalt der Werkstückträgerhälften 1', 1'', ohne dass es einer gesonderten Verriegelung bedarf.

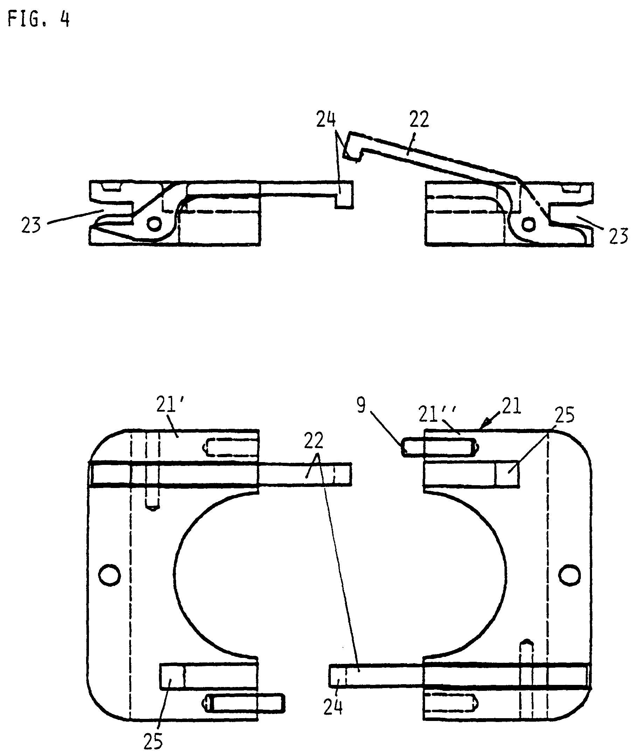

In Figur 4 ist ein alternativer, selbstverriegelnder Werkstückträger 21, bestehend aus den Werkstückträgerhälften 21' und 21'' dargestellt. Führungsstifte 9 führen auch hier die Werkstückträgerhälften beim Zusammen- und Auseinanderfahren. Zusätzlich sind an den Werkstückträgerhälften Schwenkriegel 22 gelagert, die durch die Greiferbacken 8' und 8'', wenn diese in Außennuten 23 der Werkstückträgerhälften eingreifen, in eine Entriegelungsstellung nach oben geschwenkt sind. Sobald die Greiferbacken 8' und 8'' nach dem Zusammenführen der Werkstückträgerhälften 21' und 21'' von den Außennuten 23 gelöst sind, fallen die Schwenkriegel 22 per Schwerkraft in eine Verriegelungsstellung, in der eine Nase 24 an den Schwenkriegel in eine Öffnung 25 an der jeweils anderen Werkstückträgerhälfte einrastet.

Im Parallelgreifer 8 sind die beiden Werkstückträgerhälften 1' und 1'', bzw. 21' und 21'' jeweils durch eine pneumatische Verriegelung 14, 15 mit Federrückstellung gesichert.

Der Arbeitsablauf ist mit einem auf einem gemeinsamen Grundgestell angebrachten, mehrachsigen Linearsystem wie folgt:

Dieses Linearsystem mit Parallelgreifern 8 nimmt die zurückgeführten, leeren und positionierten Werkstückträger an einer Aufnahmestation auf, holt die Werkstücke (Flaschen bzw. Behälter) mittels der Werkstückträger aus der Fertigungsform ab und hängt sie samt Werkstückträger in die Schiene 6 ein, wobei der Werkstückträger 1 durch Desaktivieren der pneumatischen Verriegelung 14, 15 vom Parallelgreifer 8 entkoppelt wird. Danach werden sofort wieder die nächsten leeren Werkstückträger von der Aufnahmestation abgeholt und der Vorgang wiederholt sich.

Die Synchronisierung ist auf den Ablauf der Produktionsmaschine abgestimmt, d. h. in der Reihenfolge der Fertigung werden die Werkstückträger mit Flaschen in das Transportschienensystem eingeführt. Die Transportschiene ist als Gleitführung ausgeführt und der Transport in der Schiene wird durch die horizontal angeordnete Rollenkette 5 mit Mitnehmerlaschen 4 durchgeführt. Das Umlenksystem ist kurvengängig ausgeprägt und besteht ebenfalls aus Schiene und Kettensystem mit entsprechenden Mitnehmern.

Zweckmäßig wird in den Kühlofen ein separates Schienensystem installiert, durch das die Werkstückträger 1 parallel mit Unterstützung eines Kettensystems transportiert werden. Am Kühlofenende werden die Werkstückträger wieder auf ein separates Schiene-Kette-System überführt. Es ist vorgesehen, alle Inspektionen der Flaschen im Werkstückträger hängend durchzuführen.

Am Ende des Flaschentransports ist die Verpackung, wobei die Werkstückträger über ein Koordinatensystem mit darauf befindlichen Kartons, Trays oder Sonstiges geführt werden und der Werkstückträger über einen gesonderten Mechanismus geöffnet wird und die Flaschen in die Verpackung gleiten.

Die leeren Werkstückträger werden zur Aufnahmeposition für den Parallelgreifer zurückgebracht.

## Patentansprüche

1. Verfahren zum Befördern von Flaschen/Behältern und insbesondere Glasflaschen von der Produktionsmaschine durch den Kühlofen zur Verpackung, **gekennzeichnet durch** die Verfahrensschritte
- Greifen der fertig geformten Flasche bzw. des Behälters (3) **durch** einen Greifer (8) mittels eines Werkstückträgers (1),
- Überführen des Werkstückträgers (1) mit Flasche (3) in ein Transportsystem (2) und Entkuppeln des Werkstückträgers (1) vom Greifer (8),
- Befördern des Werkstückträgers (1) mit Flasche (3) **durch** den Kühlofen zur Verpackung,
- Lösen des Werkstückträgers (1) von der Flasche (3) und
- Zurückführen des Werkstückträgers (1) zum Greifer (8).

2. Verfahren nach Anspruch 1,
**dadurch gekennzeichnet, dass** der Werkstückträger (1) über einen Greifeinsatz (10) aus hochwärmebeständigem Material am Flaschenhals angreift.

3. Verfahren nach Anspruch 1 oder 2,
**gekennzeichnet durch**
- beidseitiges Greifen der Flasche bzw. des Behälters (3) mittels eines geteilten Werkstückträgers (1',1'') und
- Drehen des Werkstückträgers (1',1'') mit Flasche/Behälter (3) um 90° beim Überführen von der Fertigungsform und Einhängen in ein Transportschienensystem (2).

4. Transportsystem zum Befördern von Flaschen/Behältern und insbesondere Glasflaschen von der Produktionsmaschine durch den Kühlofen zur Verpackung,
**gekennzeichnet durch**
- einen Greifermechanismus (8) mit einem Werkstückträger (1) zum Greifen der fertig geformten Flasche bzw. des Behälters (3) an der Fertigungsstation und Überführen des Werkstückträgers mit Flasche zu einem Transportschienensystem (2),
- einem Kupplungs-/Entkupplungsmechanismus (14,15) zwischen Greifermechanismus (8) und Werkstückträger (1) zum Ankuppeln eines leeren Werkstückträgers (1) an einer Aufnahmestaticn und Entkuppeln des Werkstückträgers (1) mit Flasche (3) nach dem Einhängen in das Transportschienensystem (2).

5. Transportsystem nach Anspruch 4,
**gekennzeichnet durch**
- einen zweigeteilten Werkstückträger (1',1'') mit einem Greifeinsatz (10) aus hochwärmebeständigem Material zum beidseitigen Greifen der Flasche an der Fertigungsstation und
- einem Drehmechanismus zum Drehen des Werkstückträgers (1',1") mit Flasche (3) bei der Überführung von der Fertigungsstation zum Transportschienensystem (2).

6. Transportsystem nach Anspruch 4 oder 5,
**dadurch gekennzeichnet, dass** der Greifermechanismus (8) an einem Industrieroboter ausgebildet ist, der den Werkstückträger (1) mit Flasche (3) bewegungssynchron zu einer Förderkette (5) in das Transportschienensystem (2) einhängt.

7. Transportsystem nach einem der Ansprüche 4 bis 6, **gekennzeichnet durch**
- einen Mechanismus zum Öffnen des Werkstückträgers (1) an einer Verpackungsstation und zum Abstellen der leeren Werkstückträger (1) auf einer Rückführschiene (7).

8. Transportsystem nach Anspruch 5,
**gekennzeichnet durch** ein Transportschienensystem (2) mit seitlichen Führungen (12,13) zum Zusammenhalt der zweigeteilten Werkstückträger (1',1'')

9. Transportsystem nach Anspruch 4,
**gekennzeichnet durch** wie erstes Merkmal von Anspruch 5 aber Bezugszeichen (21', 21'') und **durch** einen Verriegelungsmechanismus (22, 24, 25) zum Zusammenhalt der Werkstückträgerhälften (1',1'').

10. Transportsystem nach Anspruch 9,
**dadurch gekennzeichnet, dass** der Verriegelungsmechanismus (22,24,25) zum Zusammenwirken mit dem Greifermechanismus (8) ausgebildet ist, wobei beim Greifen der Werkstückträgerhälften (21', 21'') der Verriegelungsmechanismus gelöst und bei Freigabe der Werkstückträgerhälften nach deren Zusammenführen, der Verriegelungsmechanismus selbstätig eingerastet ist.
